# EUROPÄISCHE PATENTANMELDUNG

(11) **EP 1 884 412 A2**
(43) Veröffentlichungstag der Anmeldung: **06.02.2008**
(21) Anmeldenummer: 07021966.2
(22) Anmeldetag: 24.11.2005
(51) Int. Cl.: B60R 13/08

(54) **Abschirmteil in Form eines Hitzeschildes**

(30) Priorität: 11.02.2005 DE 102005006320
(62) Teilanmeldung aus: 05025619.7
(71) Anmelder: ElringKlinger AG, 72581 Dettingen/Erms (DE)
(72) Erfinder: Ell, Bernd, 90613 Grosshabersdorf (DE)
(74) Vertreter: Bartels & Partner

(57) **Zusammenfassung**

Die Erfindung betrifft ein Abschirmteil in Form eines Hitzeschildes, mit mindestens zwei Schildteilen (10,12), die über eine Verbindungseinrichtung lösbar miteinander verbindbar sind. Dadurch, dass die Verbindungseinrichtung aus mindestens einem Druckknopf (16) besteht, dessen Kugelteil (18) mit dem einen (10) und dessen Ösenteil (22) mit dem anderen (12) Schildteil verbunden ist, lassen sich mit geringen Betätigungskräften von Hand und funktionssicher die jeweiligen Schildteile voneinander trennen und wieder miteinander verbinden.

## Beschreibung

Die Erfindung betrifft ein Abschirmteil in Form eines Hitzeschildes, mit mindestens zwei Schildteilen, die über eine Verbindungseinrichtung lösbar miteinander verbindbar sind.

Während die Wärmeentwicklung, beispielsweise eines sparsamen leistungsoptimierten Dieselmotors, am Zylinderkurbelwellengehäuse sehr gering sein kann, gilt das für "heiße Zonen", wie bei Krümmer, Turbolader, Katalysator etc., keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, dass die hohe Packungsdichte der Aggregate den kürzenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Ebenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort bezogen auf sonstige thermische Motorenteile (Neue Werkstoffe und Entwicklungs-Tools für den Hitzeschutz in MTZ 12/2001, Jahrg.62, Seite 1044ff).

Im Stand der Technik sind als Verbindungseinrichtung sog. Federklammern beschrieben, um Abschirmteile miteinander lösbar zu verbinden oder solche an Motorenbaukomponenten oder Chassisteilen eines Fahrzeuges reversibel festzulegen und um dergestalt von der zeitaufwendigen Schraubverbindungstechnik wegzukommen; allein die dahingehenden Federklammern sind häufig aufwendig und teuer in der Herstellung und können insbesondere bei der Demontage dahingehender Abschirmteile sich derart mit ihren Klammerbügeln aufspreizen, dass die federelastische Wirkung weitgehend verloren geht, was diese für einen erneuten Festlegevorgang unbrauchbar werden läßt. Auch sind diese als zusätzliche Montageteile zu handhaben und zu bevorraten.

Ausgehend von diesem Stand der Technik stellt sich daher die Erfindung die Aufgabe, ein Abschirmteil der genannten Art unter Beibehalten seiner Vorteile, nämlich eine sehr gute Schall- und Wärmeisolation sicherzustellen, dahingehend weiter zu verbessern, dass zumindest Teile von ihm sich auch bei lang andauerndem Gebrauch funktionssicher montieren und demontieren lassen und dass der Kostenaufwand für eine dahingehende Lösung reduziert ist. Eine dahingehende Aufgabe löst ein Abschirmteil mit den Merkmalen des Patentanspruches 1 in seiner Gesamtheit.

Dadurch, dass gemäß dem kennzeichnenden Teil des Patentanspruches 1 die Verbindungseinrichtung aus mindestens einem Druckknopf besteht, dessen Kugelteil mit dem einen und dessen Ösenteil mit dem anderen Schildteil verbunden ist, lassen sich mit geringen Betätigungskräften von Hand und funktionssicher die jeweiligen Schildteile voneinander trennen und wieder miteinander verbinden. Druckknopfverbindungen an sich sind aus der Textilindustrie bekannt (DE 36 44 690 C1, DE 198 24 943 A1) und dienen dort dazu, Bekleidungsteile, beispielsweise zum Schließen einer Mantelöffnung od. dgl., lösbar miteinander zu verbinden. Dahingehende Druckknopf-Verbindungseinrichtungen sind auch noch nach einer Vielzahl von Öffnungs- und Schließvorgängen funktionssicher handhabbar und stellen dergestalt wirksam eine form- und kraftschlüssige Verbindung her. Ferner lassen sich Druckknöpfe ohne weitere Zusatzteile oder besondere Montagevorrichtungen an Produkten, auch in Form von Schildteilen, festlegen und verbleiben dort unverlierbar, was ein Vorteil ist beispielsweise gegenüber den genannten Federklammerlösungen, die als eigenständiges Bauteil zu den Schildteilen mitzuliefern und vor Montageeinsatz zu bevorraten sind.

Mit nur einem Betätigungsschritt läßt sich von Hand die Druckknopfverbindung herstellen und wieder lösen, wobei die abgerundeten Druckknopfteile (Kugelteil und Ösenteil) einer möglichen Verletzungsgefahr, wie sie gegebenenfalls durch scharfkantige Klammerteile gegeben sein kann, entgegenwirken. Sofern der jeweilige Druckknopf aus Metall besteht, ist er thermisch beständig und kann demgemäß auch bei Hitzeschildern Anwendung finden. Durch einfaches Abknöpfen des einen Schildteils vom jeweils anderen über die Druckknopf-Verbindungseinrichtung lassen sich wartungsintensive Motoren- und Maschinenbereiche freilegen, so dass dergestalt der zeitliche Wartungs- und Reparaturaufwand reduzierbar ist. Auch lassen sich dergestalt durch Entfernen eines Schildteils über die Druckknopf-Verbindungseinrichtung Schmierstellen am Motor oder an der Maschine bedienen, was ansonsten bei den bekannten Lösungen zu erheblichen Abbauarbeiten für das jeweilige Schildteil führt. Als besonders vorteilhaft hat es sich dabei erwiesen, ein Schildteil an der jeweiligen Stelle, die nicht zugänglich zu sein braucht, zu belassen und von diesem das andere Schildteil mittels der Druckknopf-Verbindungseinrichtung leicht lösbar zu gestalten.

Bei einer bevorzugten Ausführungsform des erfindungsgemäßen Abschirmteils ist vorgesehen, dass das eine Schildteil starr und das andere Schildteil flexibel ausgestaltet ist. Vorzugsweise hat dabei das flexible Schildteil einen mattenartigen Aufbau und besteht vorzugsweise zumindest teilweise aus einem hitzebeständigen Kunststoffgewebe. Aufgrund der dahingehenden Ausgestaltung läßt sich über das mattenartige Gewebe als flexibles Schildteil eine Vielzahl an Geometrien bezogen auf die Gestalt von Motoren- und Maschinenkomponenten sowie Chassisbauteilen realisieren, was insgesamt die Flexibilität für den gewünschten Einbau erhöht. Der mattenartige Aufbau kann sich insbesondere auch an vibrierende Bauteile anlegen und dämpft dergestalt wirksam den Körperschall, was ein vergleichbar starres Schildteil dergestalt nicht leisten könnte.

Bei einer weiteren bevorzugten Ausführungsform des erfindungsgemäßen Abschirmteils ist vorgesehen, dass in zumindest dem Bereich der Befestigung des Kugel- oder des Ösenteils an zumindest einem Schildteil eine Markierung insbesondere farblicher Art vorhanden ist. Aufgrund der genannten Markierung, beispielsweise in Form einer farblichen Kennzeichnung im Druckknopfbereich, läßt sich dergestalt eine eindeutige Zuordnung von korrespondierenden aneinander festzulegenden Schildteilen erreichen, was sich insbesondere bei Produktionslinien von Kraftfahrzeugen als günstig erweist, wo auf einer Produktionslinie unterschiedliche Fahrzeugvarianten aufgebaut und gegebenenfalls mit unterschiedlichen Abschirmteilen zu versehen sind.

Im folgenden wird das erfindungsgemäße Abschirmteil anhand eines Ausführungsbeispiels nach der Zeichnung näher erläutert.

Dabei zeigen in prinzipieller und nicht maßstäblicher Darstellung die
- Fig.1: eine perspektivische Vorderansicht auf das Abschirmteil, im wesentlichen bestehend aus zwei einzelnen miteinander verbundenen Schildteilen;
- Fig.2: eine der Fig. 1 entsprechende Darstellung der beiden Schildteile vor Verbinden mittels einer Druckknopf-Verbindungseinrichtung.

Das erfindungsgemäße Abschirmteil läßt sich als sog. Hitzeschild einsetzen und weist zwei einzelne Schildteile 10,12 auf, die sich über eine als Ganzes mit 14 bezeichnete Verbindungseinrichtung lösbar miteinander verbinden lassen. Die Verbindungseinrichtung 14 weist zwei in Reihe übereinander angeordnete Druckknöpfe 16 auf, wobei die beiden Druckknöpfe 16 mit ihrem jeweiligen Kugelteil 18 eine plattenförmige stegartige Verlängerung 20 des einen Schildteils 10 durchgreifen und insoweit eine Angriffsmöglichkeit bieten für das korrespondierende Ösenteil 22 im weiteren Schildteil 12. Dahingehende Druckknöpfe 16 sind im Stand der Technik, insbesondere in der Bekleidungsindustrie, in einer Vielzahl von Ausführungsformen beschrieben, so dass an dieser Stelle auf die dahingehend bekannte Verbindungslösung nicht mehr näher eingegangen wird.

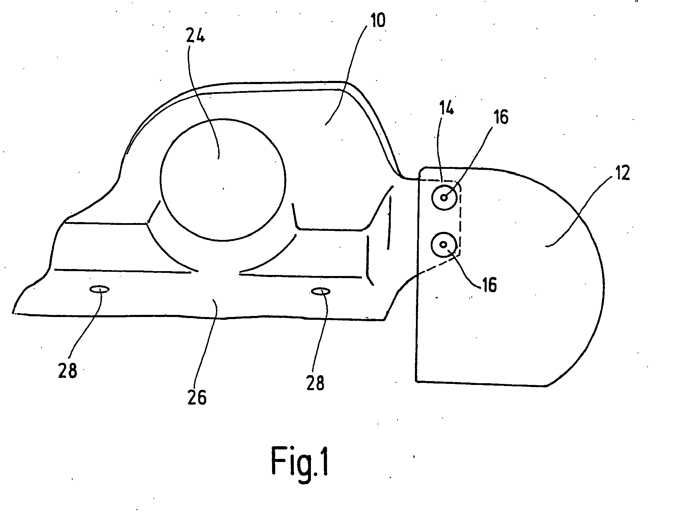

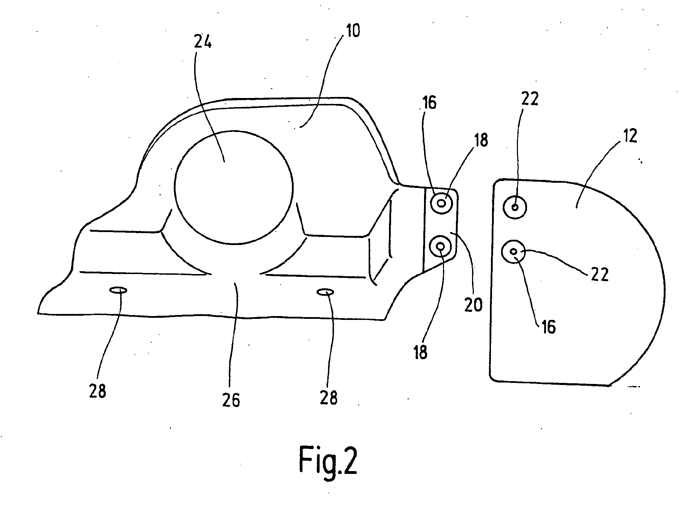

Die Ösenteile 22 weisen jedenfalls benachbart zueinander dergestalt einen Abstand auf, dass sie bei eben ausgerichtetem Schildteil 12 mit ihren Ösenöffnungen auf die vorstehenden Kugelteile 18 der Druckknöpfe 16 im ersten Schildteil 10 verrastend aufsetzbar sind. Hierzu ist in Blickrichtung auf die Fig.2 gesehen das zweite Schildteil 12 auf das erste Schildteil 10 entlang der stegartigen Verlängerung 20 aufzulegen und die beiden Druckknöpfe 16 sind dann von Hand miteinander zu verrasten, so dass sich der Verbund und mithin das Abschirmteil gemäß der Darstellung nach der Fig.1 ergibt. Sofern die Darstellung nach den Fig.1 und 2 angesprochen ist, ist das jeweilige Ösenteil 22 mit seiner rückwärtigen Ansicht gezeichnet und die Öffnung für das zuordenbare Kugelteil 18 liegt auf der gegenüberliegenden Seite und ist dergestalt nicht näher dargestellt.

Das erste Schildteil 10 besteht bei dem vorliegenden Ausführungsbeispiel eines Abschirmteils aus einem einlagigen Blechformteil, das eine augenförmige Mittenausnehmung 24 aufweist, wobei in Blickrichtung auf die Fig.1 gesehen nach unten hin einstückig sich eine kastenförmige Verbreiterung anschließt mit einem Auflageteil 26, das von zwei Bohrungen 28 durchgriffen ist, das dem Festlegen des Abschirmteils an einem nicht näher dargestellten Fahrzeugteil, beispielsweise in Form eines Achsschenkels od. dgl., dient.

In Blickrichtung auf die Fig. 1 gesehen rechts davon schließt sich dann an das erste Schildteil 10 das zweite Schildteil 12 an, das gemäß der Darstellung nach den Fig.1 über die Verbindungseinrichtung 14 lösbar mit dem ersten Schildteil 10 verbunden ist und in Blickrichtung auf die Fig.2 gesehen ist die dahingehende Verbindung gelöst dargestellt und das zweite Schildteil 12 vom ersten Schildteil 10 entfernt. Anstelle eines einlagigen Blechumformteils kann das eine Schildteil 10 auch mehrlagig ausgebildet sein, beispielsweise zwischen Blechdecklagen eine wärme- und schallisolierende Dämmung (nicht näher dargestellt) aufweisen. Ist die dahingehende Dämmung in Verlängerung bis zum Steg 20 herausgeführt, müßte insoweit das Kugelteil 18 nicht nur die jeweilige Blechlage des Schildteils 10 durchgreifen, sondern dergestalt auch die angesprochene Dämmung. Bei der gezeigten Ausführungsform ist das andere Schildteil 12 flexibel ausgebildet und weist insbesondere einen mattenartigen Aufbau auf, der zumindest teilweise aus einem Kunststoffgewebe gebildet ist, das vorzugsweise wärme- und/oder hitzebeständige Eigenschaften aufweist.

Demgemäß besteht das Kunststoffgewebe aus hitzebeständigen Fasern, wie Aramidfasern, Kohlefasern oder Mineralfasern, wobei die dahingehenden Fasern auch zumindest teilweise durch entsprechende Fäden aus denselben Werkstoffen ersetzt sein können. Das angesprochene - auch mehrlagige - Gewebe kann aus Kett- und Schußfäden gebildet sein oder ist in der Art eines Geleges oder Laminats aufgebaut. In jedem Fall läßt sich das angesprochene Kunststoffgewebe oder-gelege mit metallischen Anteilen versehen, beispielsweise indem man hitzeresistente Metallwerkstoffe durch Beschichten aufbringt, wofür sich insbesondere Sprüh- und Rakelverfahren eignen.

Bei dem in den Figuren gezeigten Ausführungsbeispiel ist das zweite Schildteil 12 an seiner dem ersten Schildteil 10 abgewandten Seite mit einem halbkreisförmigen Abschlußbogen versehen und im übrigen ist das Schildteil 12 als ebener Zuschnitt ausgewählt, um derart in der Art einer lösbaren Abdeckklappe bei montierem ersten Schildteil 10 die Zugänglichkeit von Motoren- oder Maschinenteilen auch im Bereich des Achsschenkels zu gewährleisten, um dergestalt Wartungs- und Inspektionsarbeiten einschließlich eines Schmierdienstes zu erleichtern. Da das Schildteil 12 als eben verlaufender Flächenzuschnitt sehr flexibel ist, läßt sich das Schildteil 12 insbesondere bei geometrisch größerer Ausdehnung von Hand von einer interessierenden Stelle auch wegklappen, ohne dass gleich die Druckknopf-Verbindungseinrichtung zu lösen wäre. Bei dem gezeigten Ausführungsbeispiel wird allerdings durch Lösen des jeweiligen Druckknopfes 16 die beschriebene Zugänglichkeit hergestellt, indem man das zweite Schildteil 12 vom ersten Schildteil 10, wie angegeben, entfernt.

Aufgrund des speziellen Faser- oder Fadenaufbaues des zweiten Schildteils 12 ist dieses gering wärmeleitend ausgebildet, so dass unmittelbar oder nach einer kurzen Abkühlzeit eine Betätigung von Hand möglich ist. Neben einem eben verlaufenden Flächenzuschnitt für das Schildteil 12 kann dieses auch in Abhängigkeit der gewählten Gewebe- oder Gelegeform von seiner geometrischen Ausbildung her sehr frei gestaltet werden, so dass sich dergestalt platzsparend auch geometrisch kompliziert geformte Motoren- und Maschinenteile sich sicher über das Schildteil 12 schützend abdecken lassen. Auch kann das zweite Schildteil 12 vergleichbar dem ersten Schildteil 10 aus einem Umformteil bestehen (nicht dargestellt). Bei der Auswahl der hitzebeständigen flexiblen Materialien hat sich ein Aufbau des zweiten Schildteils 12 als Glasfasermatte als besonders vorteilhaft bei praktischen Versuchen erwiesen.

Insbesondere im Bereich der stegartigen Verlängerung 20 kann das erste Schildteil 10 eine Markierung, insbesondere in Form einer farblichen Kennzeichnung (nicht dargestellt), aufweisen, die eine verbesserte Zuordenbarkeit von unterschiedlich konzipierten weiteren Schildteilen ermöglicht, wobei bei der Verwendung gleicher Markierungen, insbesondere in Form farblicher Kennzeichnungen sowohl beim Abschirmteil 10 als auch beim Schildteil 12, sich paarweise Gruppen zum Festlegen erkennen lassen, was insbesondere in Produktionslinien bei der Kraftfahrzeugherstellung eine Erleichterung darstellen kann. Des weiteren kann das Schildteil 10 eine nicht näher dargestellte Oberflächenstrukturierung aufweisen, um aufgrund der hierdurch erreichbaren, vergrößerten Oberfläche eine verbesserte Wärmeabgabe zu erreichen.
Mit der erfindungsgemäßen Verbindungseinrichtung 14 ist eine beliebig oft lösbare Verbindungstechnik erreicht, die keine Zusatzteile oder sonstigen Montagevorrichtungen vor Ort, beispielsweise an der genannten Produktionslinie von Fahrzeugen, benötigt. Dergestalt läßt sich die Anzahl der Anbauteile des Lieferumfanges niedrig halten sowie die Anzahl der benötigten Produktionsarbeitsschritte.

## Patentansprüche

1. Abschirmteil in Form eines Hitzeschildes, mit mindestens zwei Schildteilen (10,12), die über eine Verbindungseinrichtung (14) lösbar miteinander verbindbar sind, **dadurch gekennzeichnet, dass** die Verbindungseinrichtung (14) aus mindestens einem Druckknopf (16) besteht, dessen Kugelteil (18) mit dem einen (10) und dessen Ösenteil (22) mit dem anderen (12) Schildteil verbunden ist.

2. Abschirmteil nach Anspruch 1, **dadurch gekennzeichnet, dass** das eine Schildteil (10) starr und das andere Schildteil (12) flexibel ist.

3. Abschirmteil nach Anspruch 2, **dadurch gekennzeichnet, dass** das flexible Schildteil (12) einen mattenartigen Aufbau hat und insbesondere, zumindest teilweise, aus einem Kunststoffgewebe besteht.

4. Abschirmteil nach Anspruch 3, **dadurch gekennzeichnet, dass** das Kunststoffgewebe hitzebeständig ist, insbesondere aus Aramidfasern und/oder -fäden, Kohlefasern und/oder -fäden sowie Mineralfasern und/oder -fäden besteht.

5. Abschirmteil nach einem der Ansprüche 1 bis 4, **dadurch gekennzeichnet, dass** das eine Schildteil (10) aus einem Blechformteil besteht und das andere Schildteil (12) aus einem eben verlaufenden Flächenzuschnitt.

6. Abschirmteil nach einem der Ansprüche 2 bis 5, **dadurch gekennzeichnet, dass** das jeweilige Kugelteil (18) des Druckknopfes (16) das starre eine Schildteil (10) durchgreift und dass das Ösenteil (22) des Druckknopfes (16) am flexiblen Schildteil (12) angeordnet ist.

7. Abschirmteil nach einem der Ansprüche 1 bis 6, **dadurch gekennzeichnet, dass** in Reihenanordnung mindestens zwei Druckknöpfe (16) in Folge die Verbindungseinrichtung (14) bilden.

8. Abschirmteil nach einem der Ansprüche 1 bis 7, **dadurch gekennzeichnet, dass** zumindest im Bereich der Befestigung des Kugelteils (18) oder des Ösenteils (22) an zumindest einem Schildteil (10,12) eine Markierung, insbesondere farblicher Art, vorhanden ist.
